# EUROPEAN PATENT APPLICATION

(11) **EP 0 751 505 A2**
(43) Date of publication of application: **02.01.1997**
(21) Application number: 96110251.4
(22) Date of filing: 25.06.1996
(51) Int. Cl.: G11B 7/007, G11B 7/013, G11B 7/09

(54) **Optical information-recording medium**

(30) Priority: 27.06.1995 JP 160550/95
(71) Applicant: KABUSHIKI KAISHA TOSHIBA, Kawasaki-shi, Kanagawa-ken 210 (JP)
(72) Inventor: Yoshida, Nobuhisa, c/o K.K. Toshiba, Tokyo 105 (JP)
(74) Representative: Henkel, Feiler, Hänzel & Partner

(57) **Abstract**

An optical information-recording medium having a substrate (23) and phase-changing recording films (40). The substrate (23) has a tracking grooves (34) arranged at a pitch of 0.9 µ m or less, each having two sides and a bottom. Each film (40) is provided on the sides and bottom of one tracking groove (34). A record mark is formed on each recording film (40), it has a width W which is equal to or less than the bottom width B of the tracking grooves (34). The grooves (34) have a top width U which satisfies the requirement of 0.50 µ m ≦ U ≦ 0.65 µ m. Optimal tracking servo is achieved when a recording laser beam is applied to the medium to write information on the medium. The preformat signals and data signal reproduced from the medium have high C/N ratios.

## Description

The present invention relates to an optical information-recording medium. More particularly, the invention relates to an optical disk which comprises a substrate molded by using a master disk and having tracking grooves and a recording film such as a phase-changing film provided on the substrate and on which a user can write information, an optical disk which comprises a substrate molded by using a master disk and having a series of pits defining a format region and a data region and a reflecting film provided on the substrate and on which a user cannot write information, or the like.

An optical information-recording medium such as an optical disk can record information in high densities when a laser beam having a diameter of about 1 µ m is applied to its surface, forming pits having the substantially same size and width or a smaller size and a narrower width. The medium is therefore useful as a memory for storing a great amount of information.

In recent years, multimedia industry has much progressed, giving rise to a demand for an optical information-recording medium having an increased storage capacity. To meet this demand, it is proposed that a laser beam of a shorter wavelength be applied to an optical information-recording medium or super-resolution technique be employed. Further it is proposed that information be recorded in the tracking grooves and on the lands. (Hitherto, information has been recorded either in the tracking grooves or on the lands.) Still further, it is regarded as necessary to arrange the tracking grooves and record marks at a pitch as short as possible, for the purpose of increasing the recording density of a medium in two-dimensional fashion.

To increase the recording density of a medium in two-dimensional fashion is to raise the recording density in radial and circumferential directions of the medium. The recording density in the radial direction can be raised by reduce the pitch of the tracking grooves. The recording density in the circumferential direction can be increased by reducing the pitch of the record marks. If the pitch of the tracking grooves and that of the record marks are reduced, however, each record mark will be more influenced by the neighboring record marks. Consequently, the signal reproduced from each record mark will have but a small C/N ratio.

To minimize the crosstalk in the signals reproduced from the record marks and to accomplish reliable tracking servo of the medium, studies have been made to attain the best possible shape for the tracking grooves. Jpn. Pat. Appln. KOKAI Publication No. 4-358331, for example, discloses that tracking grooves which have a half-width value and a side-inclination angle, each falling in a particular range.

Optical information-recording media are classified into two types. The first type is a medium of ROM type, such as a CD (Compact Disk) or an optical video disk, from which recorded information is reproduced. The second type is one on which a user can write information. The media of the second type are classified into two sub-types. The first sub-type is an additional writable medium on which a user can write information only once. The second sub-type is a rewritable medium on which a user can information many times.

Two methods of writing information on a rewritable medium are available. The first method, used broadly, is generally known as optomagnetic recording in which a laser beam is applied to a vertically magnetized film, while a magnetic filed is applied thereto, thereby to record information on the medium and erase information from the medium. The second method is generally known as phase-changing recording, in which a laser beam applied to a recording film is changed in intensity, thereby rendering some portions of the film crystalline and other portions thereof amorphous, thereby to record information on the medium and erase information from the medium.

An additional writable medium or a rewritable medium must have tracking grooves (i.e., tracking guides) to enable a user to write information on the medium. Further, sector marks and address signals must be recorded on the medium, so that the information recorded on the medium is usually managed in the units of sectors. Sector marks and address signals must be recorded on an optical information-recording medium of ROM type, too.

A medium which has tracking grooves and on which pre-format signals (i.e., sector marks and address signals) are recorded is molded from a master disk manufactured by a two-beam exposure apparatus. The apparatus first applies a laser beam on the substrate, forming tracking grooves in the surface of the substrate. It then applies another laser beam to the lands provided among the tracking grooves, thus recording pre-format signals on the lands.

A master disk for molding an additional writable medium or a rewritable medium may not have pre-format signals recorded on it, though it has tracking grooves. Hence, no pre-format signals are recorded on an additional writable medium or a rewritable medium molded by using this type of a master disk. To have pre-format signals recorded on the medium, a laser beam is applied on the lands in an optical disk drive.

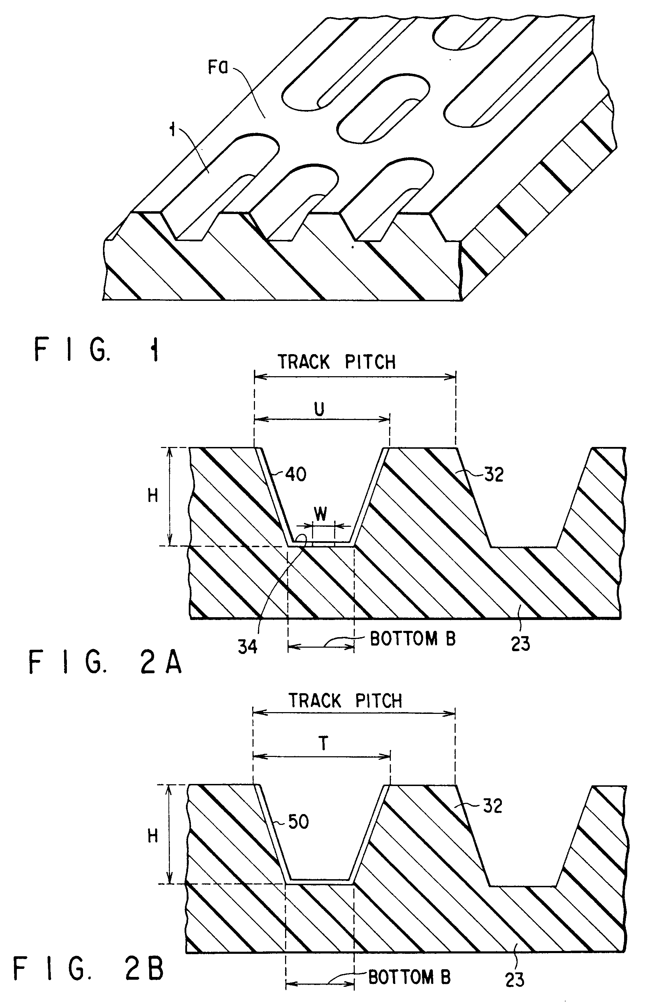

FIG. 1 shows a conventional master disk manufactured by a single-beam exposure apparatus. As shown in FIG. 1, this master disk has grooves 1 made in its surface. Pre-format signals Fa are recorded on those surface portions of the master disk which are located among the grooves 1.

An optical information-recording medium is known which comprises a molded substrate having tracking grooves and pre-format signals and a recording film such, as a phase-changing film, provided on the substrate. The tracking groove must have such a shape as to (1) accomplish optimal tracking servo of this medium, (2) increase the C/N ratio of the pre-format signals and (3) increase the C/N ratio of the signals reproduced from the medium. (The best possible shape for achieving optimal tracking servo, the best possible shape for increasing the C/N ratio of the pre-format signals, and the best possible shape for increasing the C/N ratio of the signals reproduced are, however, different from one another.) It is utmost necessary for the tracking grooves to have a particular shape to achieve reliable tracking servo and to increase the C/N ratio of the pre-format signals and the C/N ratio of the signals reproduced. Nevertheless, no shapes have been formulated which the tracking grooves should have when they are arranged at a pitch of about 0.9 or less.

An optical information-recording medium of ROM type must have grooves having a shape which is optimal for (1) achieving optimal tracking servo and (1) increasing the C/N ratio of pre-format signals. The grooves of the medium of ROM type must be optimized for another objective, i.e., to reduce the pitch of tracks and the pitch of record marks.

The object of the present invention is to provide an optical information-recording medium which has tracks arranged at a pitch of about 0.9 µ m or less and on and from which information can be recorded and reproduced in a desired manner.

More specifically, the object is to provide an optical information-recording medium on which a user can write information and an optical information-recording medium of ROM type on which a user cannot write information, either having tracks arranged at a pitch of about 0.9 µ m or less. The optical information-recording medium is designed to achieve reliable tracking servo and to increase the C/N ratio of the pre-format signals and the C/N ratio of the signals reproduced. On the other hand, the medium of ROM type is designed to achieve reliable tracking servo and to increase the C/N ratio of the pre-format signals.

An optical information-recording medium according to the invention, on which a user can write information, comprises: a substrate having tracking grooves, each having two sides and one bottom having a width B; and recording films, each provided on the sides and bottom of one tracking groove. Record marks to be formed on the recording films, respectively, have a width W which is equal to or less than the width B. The tracking grooves are arranged at a pitch 0.9 µ m or less. Each groove has a top width U ranging from 0.50 µ m to 0.65 µ m, preferably from 0.55 µ m to 0.65 µ m.

An optical ROM medium of ROM type according to the invention comprises: a substrate having series of pits (i.e., record marks) corresponding to a format region and a data region; and a reflecting film provided on the substrate. Each of the pits has a top width T ranging from 0.40 µ m to 0.65 µ m, preferably 0.50 µ m to 0.60 µ m. The pits form tracks which are arranged at a pitch of 0.9 µ m or less.

In the present invention, the width W of the record marks is equal to or less than the bottom width B of the grooves. This is because signals reproduced from the medium will have a noise level increased if the width W is greater than the bottom width B of the grooves. The top width U of the grooves ranges from 0.50 µ m to 0.65 µ m. This is because the reproduced signals will have an insufficient C/N ratio if the top width U is less than 0.40 µ m, and the it will be difficult to detect the maximum amplitude Ihmax of the signal corresponding to the longest pit if the top width U is greater than 0.65 µ m.

The depth H optimal for the grooves is a function of the wavelength λ of the laser beam applied to the medium. It is desirable that the depth H range from 600 to 700 angstroms when a laser beam having a wave-length of, for example, 685 µ m is applied to the medium.

This invention can be more fully understood from the following detailed description when taken in conjunction with the accompanying drawings, in which:
FIG. 1 is a perspective view showing a part of a conventional master disk on which pre-format signals are recorded by applying one laser beam to the surface of the disk;
FIG. 2A is a schematic sectional view showing a part of an optical information-recording medium according to an embodiment of the present invention;
FIG. 2B is a schematic sectional view illustrating a part of an optical information-recording medium according to another embodiment of the invention;
FIG. 3 is a schematic sectional view showing a part of the phase-changing recording film incorporated in the medium shown in FIG. 2A;
FIG. 4 is a block diagram of a one-beam exposure apparatus for recording information on a master disk;
FIG. 5 is a block diagram of an optical disk drive for reproducing information from an optical information-recording medium;
FIG. 6 is a graph representing the dependency which the noise level of 3T signals recorded on an optical information-recording medium has on the bottom width of grooves;
FIG. 7 is a diagram showing the waveform of a pre-format signal and that of a data signal;
FIG. 8 is a graph illustrating the characteristic of pre-format signals reproduced from a powering disk;
FIG. 9 is a graph showing the characteristic of data signals reproduced from the powering disk;
FIG. 10 is a graph representing the dependency a push-pull signal has on the top width of grooves; and
FIG. 11 is a graph depicting the dependency a pre-format signal has on the top width of grooves.

Embodiments of the recording medium according to the invention will be described, with reference to the accompanying drawings.

FIG. 2A is a sectional view of a phase-changing information-recording medium according to the present invention. The information-recording medium comprises a substrate 23 made of polycarbonate and phase-changing recording films 40. The substrate 23 has been made by molding, by using a master disk (not shown). The substrate 23 has lands 32 and tracking grooves 34. The tracking grooves 34 are arranged at a track pitch of 0.9 µ m or less. The phase-changing recording films 40 are provided in the tracking grooves 34. To be more precise, each film 40 covers the bottom and both sides of one tracking groove 34. It is on the the phase-changing recording films 40 that a user can write information in the form of record marks.

The record marks are written on those portions of the films 40 which are provided on the bottoms of the tracking grooves 34. The record marks have a width W which equal to or less than the bottom width B of the tracking grooves 34; namely, W ≦ B. The tracking grooves 34 have a top width U. The top width U ranges from 0.50 µ m to 0.65 µ m -- that is, 0.50 µ m ≦ U ≦ 0.65 µ m. Preferably, 0.55 µ m ≦ U ≦ 0.65 µ m.

As shown in FIG. 3, each phase-changing recording films 40 comprises a compound layer 24, two lower and upper protecting layers 27 sandwiching the compound layer 24, and a reflecting layer 28 provided on the upper protecting layer 27. The compound layer 24 is made of GeTe, Sb₂Te₃, InSe, InSb, GeSbTe or InSbTe. The layer 24 remains crystalline until information is recorded. When a laser beam 25 is applied to a portion 26 of the layer 24, this portion 26 will become amorphous.

FIG. 2B is a sectional view illustrating a part of an optical information-recording medium according to the invention, on which a user cannot write information at all. As seen from FIG. 2B, this optical information-recording medium comprises a substrate 23 and reflecting films 50. The substrate 23 has been made by molding, by using a master disk (not shown). The substrate 23 has a series of pits which define a format region and a data region. The tracking grooves 34 are arranged at a track pitch of 0.9 µ m or less. The reflecting films 50 are provided in the pits. More correctly, each film 50 covers the bottom and both sides of one pit. Each pit has a top width T which ranges from 0.40 µ m to 0.65 µ m; namely, 0.40 µ m ≦ T ≦ 0.65 µ m. Preferably, 0.50 µ m ≦ T ≦ 0.65 µ m.

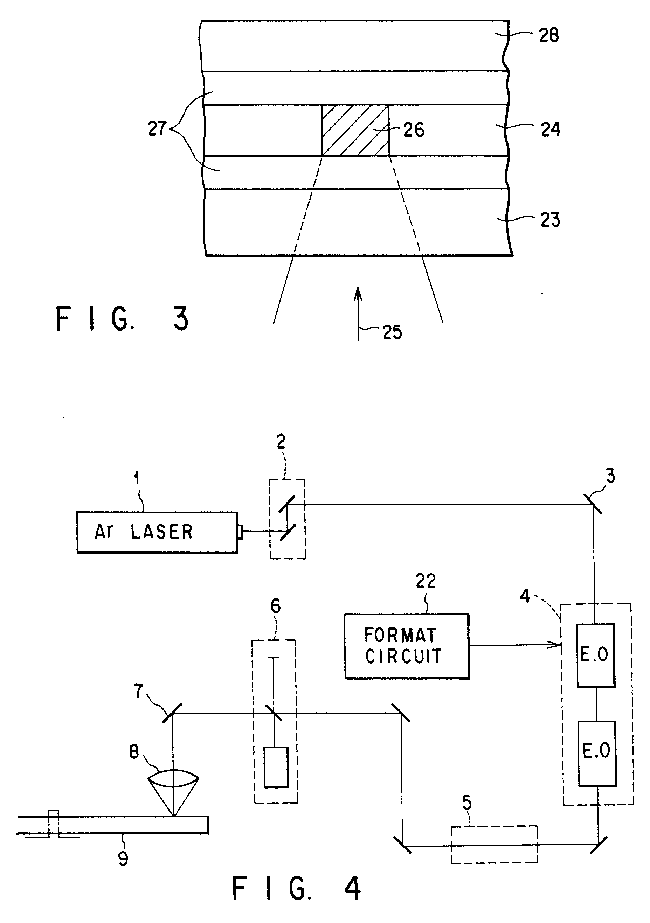

FIG. 4 shows a one-beam exposure apparatus for recording information on the master disk. The apparatus comprises an Ar laser 1, a beam-axis control system 2, a mirror 3, a beam modulating system 4, a beam-adjusting system 5, a beam-monitoring system 6, a mirror 7, an objective lens 8, and a format circuit 22.

In operation, the laser beam emitted from the Ar laser 1, which can be replaced by a Kr laser, is applied to the beam-axis control system 2. The system 2 adjusts the axis of the beam which has shifted because of changes in the temperature of the laser 1. The mirror 3 reflects the laser beam, which is applied to the beam modulating system 4. The beam modulating system 4 modulates the beam in accordance with a format signal supplied from the format circuit 22. The laser beam modulated with the format signal is applied to the beam-adjusting system 5. The system 5 which comprises a member having a pin hole or a slit adjusts the diameter and shape of the laser beam. The beam thus adjusted is applied to the beam-monitoring system 6, which determines the diameter and shape of the laser beam. The mirror 7 guides the laser beam to the objective lens 8, which focuses the beam on a circular substrate 9. Grooves and a format pattern are thereby formed in and on the photoresist coated on the substrate 9. (The apparatus shown in FIG. 4 may be replaced by a two-beam exposure apparatus in which a beam splitter splits a laser beam into two beams, which are modulated independently and which are combined into one beam by a beam combiner.)

The substrate 9 applied with the laser beam is subjected to development, Ag sputtering, Ni electrocasting, surface-processing, and edge-processing and is thereby made into a master disk, or a stamper. The master disk is used, thereby molding medium substrates of the type shown in FIG. 2A or 2B, each made of, for example, acrylic resin or polycarbonate resin. A recording film which will change in phase or diffuses to make an alloy when a laser beam is applied to it is formed on each substrate thus molded, thereby to provide an optical information-recording medium on which a user can write information.

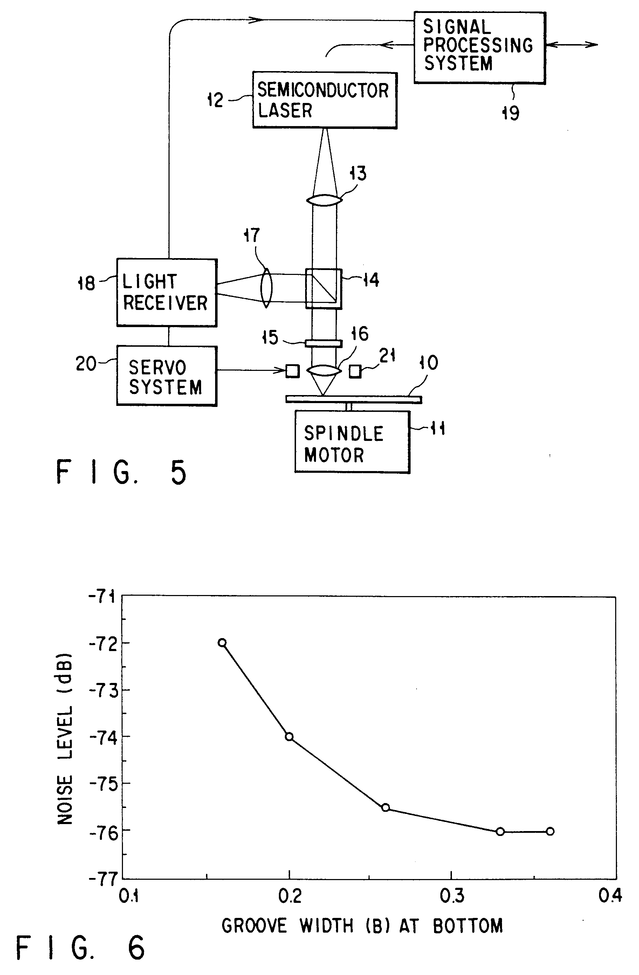

FIG. 5 illustrates an optical disk drive for reproducing signals from the optical information-recording medium manufactured in the method described above. The signals reproduced are examined to evaluate the characteristics of the recording medium.

As shown in FIG. 5, the optical disk driver comprises a spindle motor 11, a semiconductor laser 12, a collimator lens 13, a polarization beam splitter 14, a quarter-wavelength (λ/4) plate 15, an objective lens 16, a detecting lens 17, a light receiver 18, a signal-processing system 19, a servo system 20, and a drive coil 21. An optical disk 10 is connected to the shaft of the spindle motor 11.

In operation, the spindle motor 11 rotates the optical disk 10 in a predetermined direction. The laser beam emitted from the semiconductor laser 12 is applied to the collimator lens 13. The lens 13 changes the beam to a beam having a constant diameter. The beam is applied to the polarization beam splitter 14. The beam splitter 14 passes only those parts of light wave which are parallel to the light-receiving surface of the beam splitter 14. These parts of the light wave pass through the quarter-wavelength plate 15 and undergo circular polarization. The objective lens 16 focuses the beam output from the plate 15, on the optical disk 10.

The disk 10 is a high-density recording type. Therefore, the objective lens 16 has an number of aperture (NA) of 0.6. The laser beam has a wavelength of 650 nm if the disk 10 is a full-ROM disk, or a wavelength of 680 nm if the disk 10 is a phase-changing type. Whichever laser beam is used, a beam sport having a diameter of about 1 µ m is formed on the optical disk 10 as long as the focal point of the objective lens 16 remains in the surface of the optical disk 10.

The laser beam is reflected by the optical disk 10 and applied through the objective lens 16 to the quarter-wavelength plate 15 and undergoes linear polarization. The beam splitter 14 bends the beam emitted from the plate 15, by 90°, applying the same via the detection lens 17 to the light receiver 18. The light receiver 18 converts the beam into a feedback signal, which is supplied to the signal-processing system 19 and the servo system 20.

The system 19 processes and controls the feedback signal into a reproduced signal. Further, the system 19 processes and controls a data signal supplied from an external device, thereby generating a signal. This signal will be supplied to the semiconductor laser 12 and will eventually recorded on the optical disk 10.

In the meantime, the servo system 20 controls the current flowing through the drive coil 21 in accordance with the feedback signal supplied from the light receiver 18. As the current is controlled, the coil 21 moves the objective lens 16, achieving not only tracking servo but also focus servo.

The optical disk driver shown in FIG. 5 is used to evaluate the characteristics of the optical disk 10.

A master powering disk was made by a one-beam exposure apparatus of the type shown in FIG. 4. It had five groups of grooves in five recording zones. The grooves of each group had a top width U and a bottom width B which are different from those of the grooves of any other group, as is shown in the following Table. The widths U and B were measured by an STM (Scanning Tunneling Microscope). Using the master powering disk, powering disks were made by molding. These powering disks were set in the optical disk drive shown on FIG. 5 and driven, one at a time, to record data signals on the powering disks and reproduce the data signals from the powering disks. The noise levels of the signals reproduced from each powering disk were recorded and examined. The results were as is shown in FIG. 6.

**Table**

| Grooves in Powering Disk | | |
|---|---|---|
| Recording zone | Gr top width (U) | Gr bottom width (B) |
| No. 1 | 0.68 µ m | 0.36 µ m |
| No. 2 | 0.60 µ m | 0.33 µ m |
| No. 3 | 0.55 µ m | 0.26 µ m |
| No. 4 | 0.49 µ m | 0.20 µ m |
| No. 5 | 0.46 µ m | 0.16 µ m |

As can be understood from Table, the noise level greatly increased at a bottom width B between 0.25 and 0.30 µ m. A laser beam having the intensity most optimal for writing information was applied to a phase-changing recording medium, thus writing record marks on the recording medium. The widths W of the record marks were measured by a TEM (Transmission Electron Microscope). They ranged from 0.25 to 0.30 µ m.

In view of the facts described in the preceding paragraph, it is assumed that the noise level of a signal reproduced from an optical information-recording medium increases when the width W of the record marks is greater than the bottom width B of the grooves, because each record mark is written not only on the bottom of one groove but also on the sides of the groove which are much more rough than the surfaces of the land and the bottom of the groove. Hence, the optical information-recording medium must have grooves having a bottom width B which is equal to or greater than the width W of the record marks (B ≧ W), in order to reproduce data signals which have a sufficient C/N ratio.

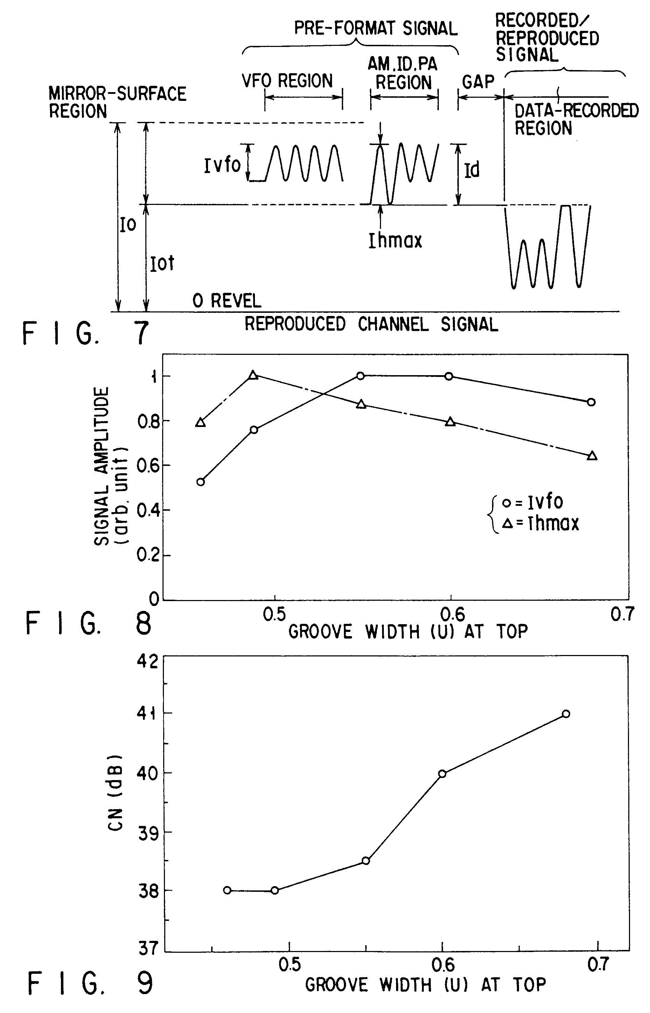

FIG. 7 shows the waveforms of a pre-format signal and a data signal which were reproduced from an optical information-recording medium which had been molded by using the master disk of the type shown in FIG. 1 and which had phase-changing films of the type shown in FIG. 3. As seen from FIG. 7, the light reflected from each groove had an intensity Iot, the light reflected from each mirror-surface region had a intensity Io greater than Iot. The pre-format signal had an amplitude at an intensity higher than Iot, whereas the data signal had an amplitude at an intensity lower than Iot. Each pre-format signal consisted of a VFO region and an ID region. The VFO region corresponded to a series of pits densely arranged. The ID region corresponded to a series of pits different in lengths. Both the VFO region and the ID region need to have a sufficient amplitude to be detected. The VFO region had an amplitude Ivfo, and the ID region a maximum amplitude Ihmax which corresponded to the longest of the pits.

FIG. 8 illustrates the characteristic (Ivfo and Ihmax) of the pre-format signals which were reproduced from the powering disk described above, and FIG. 9 shows the characteristic (C/N ratio) of the data signals which were reproduced from the powering disk. Since the master powering disk had been made by a one-beam exposure apparatus, the grooves formed in each recording zone had almost the same width as the pits formed in the recording zone. Therefore, the width of the grooves formed in each recording zone, shown in Table, can be assumed equal to the width of the pits formed in the same recording zone.

In FIG. 8, the top widths U of grooves are plotted on the abscissa, and the normalized maximum amplitudes of the VFO and ID regions of the pre-format signal are plotted on the ordinate. As FIG. 8 shows, the amplitude Ivfo of the VFO region was maximal when the top width U of the grooves was 0.55 to 0.60 µ m. By contrast, the amplitude Ihmax of the ID region was maximal when the top width U of the grooves was about 0.50 µ m. That is, one part of the pre-format signal had a maximum amplitude when the grooves had a certain top width, and another part of the pre-format single had a maximum amplitude when the groove had a different top width. FIG. 8 suggests that the top width U of the grooves should range from 0.46 µ m to 0.65 µ m, preferably 0.50 µ m to 0.60 µ m, so that the pre-format signal may have a high C/N ratio.

FIG. 9 represents the relationship the top width U of the grooves had with the C/N ratio of the data signal reproduced. As clearly seen from FIG. 9, the greater the top width U, the higher the C/N ratio. It is desirable that the top width U be 0.55 µ m or more, preferably 0.60 µ m or more. To record information on the optical information-recording medium and reproduce data therefrom, however, the pre-format signal must be correctly detected so as to determine the address at which the information is to be recorded. A push-pull having a sufficient amplitude was reproduced from the powering disk of this embodiment. This proves that reliable tracking servo was accomplished.

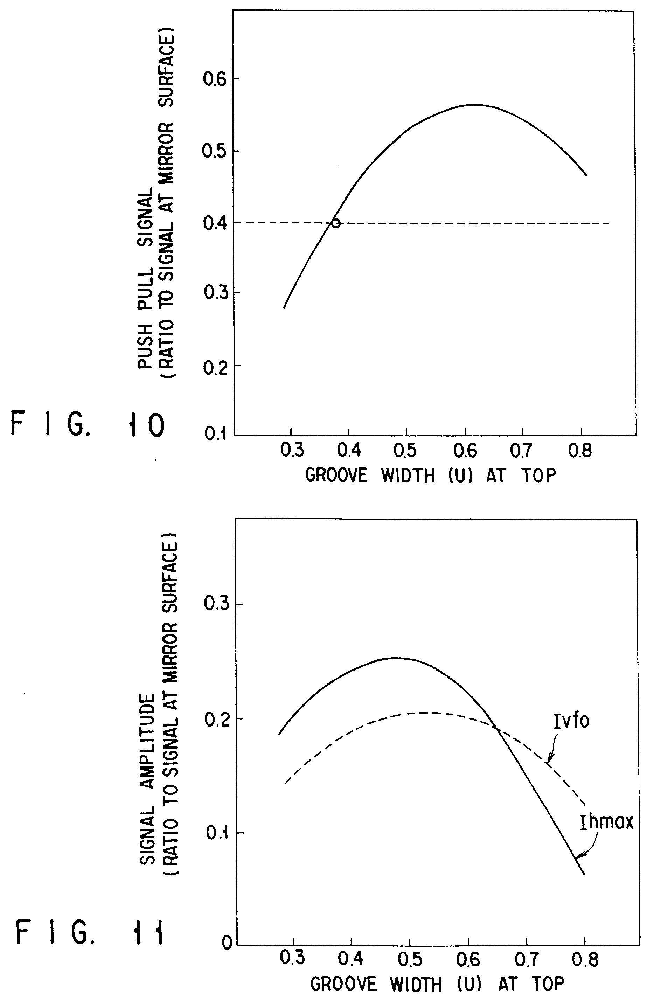

Simulation was performed for the substrate of an optical information-recording medium, which was made of polycarbonate and which had been molded by using the master disk of the type shown in FIG. 1, in order to determine the dependency a push-pull signal and a pre-format signal have on the top width U of the grooves formed in the substrate of the optical information-recording medium. The results of the simulation were as is depicted in FIGS. 10 and 11. (The dependency is similar for an optical information-recording medium which comprises a substrate of polycarbonate and recording films provided in the grooves.)

FIG. 10 shows the dependency which the amplitude of a push-pull signal has upon the top width U of the grooves when the substrate is irradiated with a laser beam having a wavelength (λ) of 684 nm and an NA of 0.6. As seen from FIG. 10, the push-pull signal has the maximum amplitude when the grooves have a top width U of 0.6 µ m. To achieve reliable tracking, the push-pull signal should have as large an amplitude as possible. However, it is desirable that the top width U be 0.4or more since the phase-changing workshop regulations read, "The push-pull signal reproduced from a substrate having emboss portions should have an amplitude which is 38% or more of the all light reflected."

FIG. 11 is a graph depicting the dependency which the amplitude of a pre-format signal has upon the top width U of the grooves. The simulation results shown in FIG. 11 are very similar to those shown in FIG. 10. As FIG. 11 shows, however, it is difficult to detect the amplitude Ihmax of the ID region when the top width U of the grooves is 0.7 µ m or more. The the amplitude of the amplitude Ivfo of the VFO region changes but a little when the top width U ranges from 0.4 µ m to 0.7 µ m.

The results of the simulation, shown in FIGS. 10 and 11, suggest that an optical information-recording medium of additional writable type and an optical information-recording medium of rewritable type, on which a user can write data, should have grooves which are relatively broad to cope with the characteristics of signals recorded on them and reproduced from them. More specifically, these types of media must have grooves whose top width U ranges from 0.50 µ m to 0.65 µ m (0.50 µ m ≦ U ≦ 0.65 µ m), preferably from 0.55 µ m to 0.65 µ m (0.55 µ m ≦ U ≦ 0.65 µ m). The results of the simulation also suggest that an optical information-recording medium of full-ROM type, on which data is recorded in the form of pre-pits, should have grooves which are relatively narrow to cope with the characteristics of pre-format signals only. To be more specific, the medium of full-ROM type have grooves which have pits having a top width T ranging from 0.45 µ m to 0.65 µ m (0.45 µ m ≦ T ≦ 0.65 µ m), preferably from 0.50 µ m to 0.60 µ m (0.50 µ m ≦ T ≦ 0.60 µ m).

As indicated above, the width W of the record marks is equal to or less than the bottom width B of the grooves, and the top width U of the grooves ranges from 0.50 µ m to 0.65 µ m. Therefore, the present invention is advantageous in the following respects:
1. Record marks are formed on the bottoms of the grooves, never on the sides of the groove which are much more rough than bottoms of the grooves. Hence, the signals reproduced from the record marks have but a very little noise.
2. The C/N ratio of a pre-format signal and that of a data signal, both reproduced from an optical information-recording medium having rewritable phase-changing recording films have a trade-off relation in respect of the shape of the grooves. Nonetheless, both the pre-format signal and the data signal can be reproduced correctly and the tracking can be reliable, provided that the tracking grooves are arranged at a track pitch of 0.9 µ m or less.
3. Pre-format signals and data signals reproduced from an optical information-recording medium of full-ROM type according to the invention have sufficient amplitudes. This is because these signals correspond to series of pits formed in the medium, which have different length and which are arranged at a pitch of 0.9 µ m or less, and each pit satisfies the above-mentioned requirement of 0.45 µ m ≦ T ≦ 0.65 µ m.

## Claims

1. An optical information-recording medium characterized by comprising:
a substrate (23) having tracking grooves (34), each having two sides and one bottom having a width B; and
recording films (50), each provided on the sides and bottom of one tracking groove (34);
wherein record marks are to be formed on the recording films (50), respectively, each record mark having a width W which is equal to or less than the width B.

2. The medium according to claim 1, characterized in that said tracking grooves (34) are arranged at a pitch of at most 0.9 µ m, said recording films (50) are of phase-changing type, and said tracking grooves (34) have a top width U ranging from 0.50 µ m to 0.65 µ m.

3. The medium according to claim 1, characterized in that each of said tracking grooves (34) consists of discrete parts, and pits corresponding to format signals are formed in those portions of said substrate (23) which are located among the discrete parts of each tracking groove.

4. An optical information-recording medium characterized by comprising:
a substrate (23) having series of pits corresponding to a format region and a data region; and
a reflecting film (50) provided on said substrate.
wherein each of said pits has a top width T ranging from 0.40 µ m to 0.65 µ m.

5. The medium according to claim 4, characterized in that said pits form tracks which are arranged at a pitch of 0.9 µ m at most, and each of said pit has a top width T ranging from 0.50 µ m to 0.60 µ m.

6. An optical information-recording medium characterized by comprising:
a substrate (23) having tracking grooves (34), each consisting of discrete parts and having two sides and one bottom having a width B, and having pits corresponding to format signals and formed in those portions of said substrate (23) which are located among the discrete parts of each tracking groove (34); and
recording films (50), each provided on the sides and bottom of one tracking groove (34);
wherein said tracking grooves (34) are arranged at a pitch of 0.9 µ m at most, record marks are to be formed on the recording films (50), respectively, each record mark having a width W which is equal to or less than the width B, and said tracking grooves (34) have a top width U ranging from 0.50 µ m to 0.65 µ m.

7. An optical information-recording medium characterized by comprising:
a substrate (23) having series of record marks corresponding to a format region and a data region; and
a reflecting film (50) provided on said substrate (23),
wherein each of pits has a top width T ranging from 0.40 µ m to 0.65 µ m.

8. The medium according to claim 7, characterized in that said record marks form tracks which are arranged at a pitch of 0.9 µ m at most, and each pit has a top width T ranging from 0.50 µ m to 0.60 µ m.

9. An optical information-recording medium characterized by comprising:
a substrate (23) having tracking grooves (34), each consisting of discrete parts and having two sides and one bottom having a width B, and having record marks formed in those portions of said substrate (23) which are located among the discrete parts of each tracking groove; and
recording films (50), each provided on the sides and bottom of one tracking groove (34);
wherein said record marks be formed on the recording films (50), respectively, each record mark having a width W which is equal to or less than the width B.

10. The medium according to claim 9, characterized in that said marks form tracks which are arranged at a pitch of 0.9 µ m at most, said recording films (50) are of phase-changing type, and said tracking grooves (34) have a top width U ranging from 0.50 µ m to 0.65 µ m.
